(19) Europäisches Patentamt
European Patent Office
Office européen des brevets

(11) **EP 3 237 732 B1**

(12) **FASCICULE DE BREVET EUROPEEN**

(45) Date de publication et mention
de la délivrance du brevet:
**06.02.2019 Bulletin 2019/06**

(21) Numéro de dépôt: **15823347.8**

(22) Date de dépôt: **14.12.2015**

(51) Int Cl.:
*F01N 3/08* (2006.01)      *F02D 41/02* (2006.01)
*F01N 11/00* (2006.01)

(86) Numéro de dépôt international:
**PCT/FR2015/053472**

(87) Numéro de publication internationale:
**WO 2016/102805 (30.06.2016 Gazette 2016/26)**

(54) **PROCÉDÉ DE DIAGNOSTIC D'UN PIÈGE A OXYDES D'AZOTE ET DISPOSITIF ASSOCIÉ**

VERFAHREN ZUR DIAGNOSE EINER STICKOXIDFALLE UND ZUGEHÖRIGE VORRICHTUNG

METHOD FOR DIAGNOSING A NITROGEN OXIDE TRAP AND ASSOCIATED DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2014 FR 1463116**

(43) Date de publication de la demande:
**01.11.2017 Bulletin 2017/44**

(73) Titulaire: **RENAULT s.a.s.**
**92100 Boulogne-Billancourt (FR)**

(72) Inventeurs:
• **BERTRAND, Gregory**
**92600 Asnieres (FR)**
• **TUNETIER, Christophe**
**91610 Ballancourt sur Essonne (FR)**
• **VALDEOLMILLOS PADILLA, Teresa**
**75007 Paris (FR)**

(56) Documents cités:
**DE-A1-102012 218 728      FR-A1- 2 999 233
US-A1- 2006 207 244      US-A1- 2012 124 972
US-A1- 2014 245 822**

**Description**

DOMAINE TECHNIQUE DE L'INVENTION

L'invention concerne un procédé de diagnostic de l'état de fonctionnement d'un piège à oxydes d'azote. Elle concerne également un dispositif de diagnostic apte à la mise en oeuvre d'un tel procédé. Elle trouve une application avantageuse sous la forme d'un diagnostic embarqué dans un véhicule automobile équipé d'un moteur diesel associé à un piège à oxydes d'azotes.

ETAT DE LA TECHNIQUE

De nombreux moteurs modernes à combustion interne, en particulier les moteurs diesel des véhicules automobiles, sont équipés d'un piège à oxydes d'azote ($NO_x$) pour respecter les normes légales qui limitent les émissions à l'échappement de polluants par ces véhicules.

Un piège à oxydes d'azote est généralement placé dans la ligne d'échappement d'un véhicule et fonctionne de manière discontinue, selon deux modes distincts.

Pendant le fonctionnement habituel du moteur en mélange pauvre, le piège retient une partie des molécules de $NO_x$ émises par le moteur sur différents compartiments catalytiques de stockage, le reste étant rejeté dans l'atmosphère après avoir traversé le piège. Le pourcentage de molécules de $NO_x$ du moteur qui est retenu par le piège est appelé efficacité de stockage.

Quand la masse de $NO_x$ stockée dans le piège atteint un seuil prédéterminé en fonction de la capacité maximale de stockage, un basculement provoqué du fonctionnement du moteur en mélange riche, c'est-à-dire avec un défaut d'oxygène par rapport à la stoechiométrie, permet de régénérer le piège.

La phase de régénération consiste à purger le piège des $NO_x$ accumulés lors de la phase de fonctionnement de stockage. Au cours de cette phase de fonctionnement en mélange riche, des réducteurs (hydrocarbures imbrûlés HC et monoxyde de carbone CO) provenant du moteur passent dans le piège et réduisent les molécules de $NO_x$ en molécules d'azote $N_2$ et de dioxyde de carbone $CO_2$.

Pendant cette phase de régénération, on règle la richesse à une valeur moyenne qui est généralement comprise entre 1,03 et 1,10 , typiquement 1,04 ou 1,05. Une telle valeur de richesse représente un bon compromis entre la durée de la régénération et la quantité de carburant consommée.

Pour s'assurer que les rejets dans l'atmosphère des gaz d'échappement d'un véhicule automobile sont en permanence conformes aux normes légales, il est courant de surveiller l'état de fonctionnement de son piège à oxydes d'azote, c'est-à-dire de tester son efficacité de stockage, grâce à un diagnostic embarqué.

On connaît plusieurs procédés qui visent à surveiller l'état de fonctionnement d'un piège à oxydes d'azote.

En particulier, la publication FR 2 940 356-B1, de façon similaire à la publication FR 2 999 233 A1, divulgue un procédé de diagnostic dans lequel on détermine un critère de diagnostic égal à la masse de réducteurs utilisée pendant la régénération en mode riche d'un piège à oxydes d'azote, et on compare ce rapport avec un seuil.

La masse de réducteurs consommée est égale à l'intégrale temporelle de la différence entre le débit massique de réducteurs entrant dans le piège, diminué du débit massique de réducteurs sortant du piège. Le débit de réducteurs entrant peut être calculé comme le produit du débit des gaz d'échappement, multiplié par la valeur de la richesse des gaz entrant dans le piège, mesurée par exemple par une sonde à oxygène implantée en amont du piège. De la même manière, le débit de réducteurs sortant peut être calculé comme le produit du débit des gaz d'échappement, multiplié par la valeur de la richesse des gaz sortant du piège, mesurée par exemple par une autre sonde à oxygène implantée en aval du piège.

La demanderesse a constaté que, en raison d'un manque de répétabilité de la mesure, des dispersions liées aux tolérances de fabrication des différentes pièces du moteur et des conditions de roulage dans lesquelles se déroule la régénération, un tel procédé n'est pas assez précis pour distinguer sans ambigüité un piège en bon état d'un piège présentant une efficacité dégradée mais encore non nulle. Un tel procédé comporte des risques de non détection et de fausse détection.

De ce fait, la demanderesse a proposé dans la demande de brevet FR1360334 un procédé amélioré de diagnostic d'un piège à oxydes d'azote, dans lequel la masse de réducteurs est déterminée au cours d'une étape de régénération spéciale du piège, réalisée aux fins du diagnostic à une deuxième valeur de richesse de fonctionnement du moteur qui est supérieure à la première valeur de richesse à laquelle on purge ordinairement le piège. Par exemple, on a prévu que la deuxième valeur de richesse soit sensiblement égale à 1,10 , la première valeur de richesse étant sensiblement égale à 1,04.

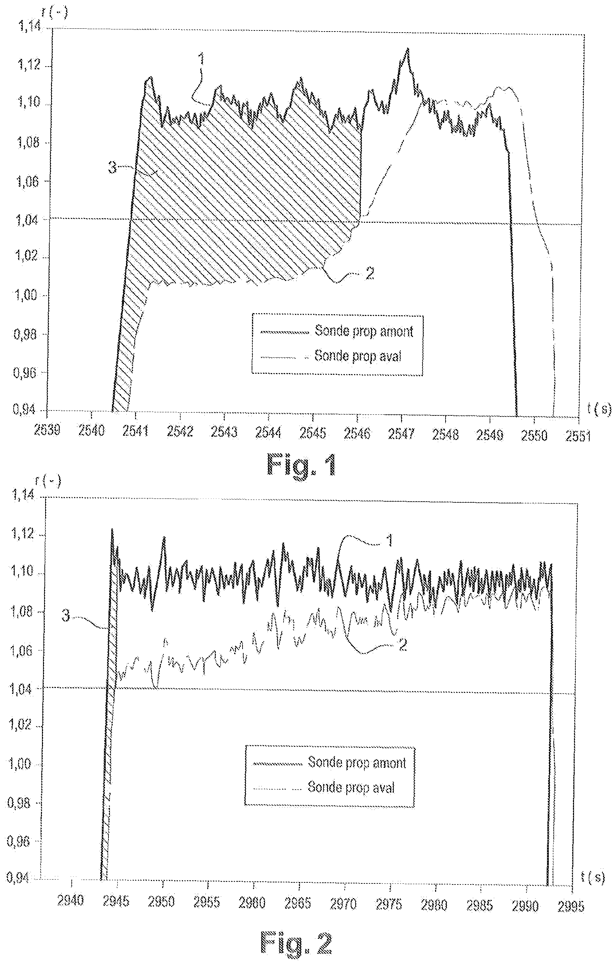

Comme le montrent les figures 1 et 2 annexées, un tel procédé amélioré permet de détecter correctement des pièges dont toute leur efficacité de stockage et de distinguer sans ambigüité un piège en bon état d'un piège commençant à être défectueux.

Sur chacune de ces figures, on a représenté en abscisse le temps t pendant lequel la régénération d'un piège à oxydes d'azote se déroule, et en ordonnée, la richesse des gaz d'échappement à l'entrée ou à la sortie d'un piège. La courbe 1 en trait plein représente la valeur de la richesse mesurée par une sonde à oxygène placée en amont du piège, et la courbe 2 en trait mixte représente la valeur de la richesse mesurée par une sonde à oxygène placée en aval du piège.

Pour un débit de gaz d'échappement constant, la masse de réducteurs consommée lors du diagnostic réalisé pendant une purge à richesse augmentée, qui est l'objet de la demande de brevet FR1360334, est représentée par la surface hachurée 3 située entre les deux courbes de richesse précédentes, entre l'instant correspondant au début du diagnostic et l'instant correspondant à la fin du diagnostic.

En ce qui concerne le début du diagnostic, on a ici initialisé la masse de réducteurs consommée à zéro gramme, à l'instant où la richesse des gaz a atteint au moins la valeur de 1,04 .

En ce qui concerne la fin du diagnostic, on a ici arrêté de calculer la masse de réducteurs consommée à l'instant où la richesse des gaz à la sortie du piège a atteint à son tour au moins la valeur de 1,04 . Le basculement du signal de richesse délivré par la sonde aval en mélange riche est représentative de la consommation du stock d'oxydes d'azote, ou au moins de sa consommation partielle, la réduction du stock d'oxydes d'azote résiduels étant ensuite plus lente.

Des variantes sont possibles. Par exemple, on peut aussi arrêter de calculer la masse de réducteurs consommée lorsque la richesse mesurée par la sonde aval rejoint la richesse qui est mesurée au même instant par la sonde amont.

La figure 1 représente le comportement d'un piège en bon état, par exemple un piège dont l'efficacité a une valeur égale à 70%. La régénération à richesse 1,10 se déroule ici sensiblement entre les instants t = 2540,5 s et t =2547,5 s. La phase de calcul de la masse de réducteurs prend fin à l'instant t = 2546 s, c'est-à-dire qu'elle a une durée comprise entre 5 et 6 secondes. La surface hachurée 3 représente la masse de réducteurs $M_{red}$ consommée pendant la phase de régénération partielle.

La figure 2 représente le comportement d'un piège dégradé mais d'efficacité non nulle, par exemple un piège dont l'efficacité a une valeur égale à 12%. La phase de calcul se déroule ici sensiblement entre les instants t = 2944 s et t = 2945 s, c'est-à-dire qu'elle dure moins de 1 seconde. On observe ici que la surface hachurée 3, représentant la masse de réducteurs $M_{red}$ consommée pendant la phase de régénération partielle, est de très loin moins élevée que sur la figure 2.

En effet, quand on procède à une régénération spéciale du piège à une valeur de richesse relativement élevée de l'ordre de 1,10 , on apporte brutalement une grande quantité de réducteurs au piège. Un piège en bon état de fonctionnement parvient à retenir en son sein une telle quantité de réducteurs pour la réduction des oxydes d'azote, de sorte que la richesse des gaz d'échappement en aval du piège est relativement lente à basculer en mélange riche.

Dans le cas d'un piège en moins bon état de fonctionnement, l'afflux de réducteurs est trop rapide. Une grande partie des réducteurs passe à travers le piège sans y être retenu, faisant basculer la richesse des gaz d'échappement en aval du piège en mélange riche de manière quasi-instantanée. Seule une fraction des réducteurs apportés au piège réduit effectivement les oxydes d'azote qui y sont stockés.

Ainsi, contrairement à un diagnostic selon la publication FR 2 940 356-B1, un diagnostic effectué lors d'une régénération spéciale avec une richesse augmentée, de l'ordre de 1,10 , comme il est prévu dans la demande de brevet FR1360334, permet de distinguer efficacement un piège en bon état d'un piège commençant à être défectueux.

On sait d'autre part que, quelle que soit la valeur particulière de la richesse choisie pour régénérer un piège à oxydes d'azote, une mise au point préalable du moteur est nécessaire pour assurer convenablement le basculement du mode de fonctionnement habituel du moteur en mélange pauvre dans son mode de régénération du piège en mélange riche.

Une telle mise au point est complexe. Les réglages du moteur, plus particulièrement le réglage du débit d'air et de l'injection de carburant, ainsi que, le cas échéant, le réglage d'un débit de gaz d'échappement recyclés à l'admission (EGR) sont prédéterminés au banc pour une très large plage de points de fonctionnement régime/charge du moteur, plage dans laquelle une régénération est possible.

D'autre part, ces réglages répondent à de nombreuses contraintes. Notamment, les réglages transitoires entre le fonctionnement du moteur en mélange pauvre et le fonctionnement du moteur en mélange riche sont tels que le couple délivré reste sensiblement le même, pour que le conducteur n'ait pas besoin de réadapter la demande de couple pendant la transition, et qu'il ne ressente pas d'à-coups. Ils sont aptes à limiter le bruit lié à la combustion du carburant produisant le couple. Ils permettent aussi au moteur de fonctionner de façon fiable, notamment en limitant la dilution dans l'huile de lubrification du moteur d'une partie du carburant injecté dans le moteur pour la réduction des oxydes d'azote dans le piège, et en maîtrisant la température.

On comprend de ce qui précède que, dans le cas où une purge doit être réalisée à une richesse augmentée par rapport à la richesse d'une purge ordinaire pour diagnostiquer un piège, comme c'est le cas dans la demande de brevet FR1360334, la mise au point des réglages transitoires du moteur entre le mode de fonctionnement en mélange pauvre et le mode de fonctionnement en mélange riche à richesse augmentée suppose de doubler le travail de mise au point préalable, ce qui est particulièrement fastidieux.

RESUME DE L'INVENTION

L'invention propose de remédier aux défauts des procédés de diagnostic d'un piège à oxydes d'azote dans lesquels on détermine un critère de diagnostic à partir de la masse de réducteurs consommée pendant une phase de régénération du piège.

Plus précisément, elle propose un procédé de diagnostic qui soit fiable et précis, tout en pouvant être mis en oeuvre de manière simple et avec très peu de mise au point supplémentaire par rapport aux réglages préexistants du moteur, notamment par rapport aux réglages transitoires déjà nécessairement réalisés pour la purge ordinaire du piège.

Elle propose pour cela un procédé de diagnostic d'un piège à oxydes d'azote associé à un moteur à combustion interne, ledit piège étant apte à réduire les oxydes d'azote stockés en son sein par réaction avec du carburant du moteur pendant une étape de régénération du piège, ladite étape de régénération étant provoquée par un basculement du réglage du moteur en mélange riche dans lequel le couple du moteur est issu de l'injection d'au moins une quantité principale de carburant et le carburant pour la réduction des oxydes d'azote est issu de l'injection d'une quantité secondaire de carburant, ledit procédé comprenant :

-   une étape de détermination de la masse de réducteurs $M_{red}$ consommée au cours d'une étape de régénération ;
-   une étape de comparaison de ladite masse $M_{red}$ avec un seuil de défaillance en dessous duquel on détermine que le piège est défaillant ; et,
-   une étape d'émission d'un signal indiquant l'état de défaillance du piège.

La principale caractéristique du procédé est qu'on détermine la masse de réducteurs $M_{red}$ au cours d'une étape de régénération spéciale du piège réalisée aux fins du diagnostic à une valeur de richesse de fonctionnement du moteur qui est :

-   d'abord égale à une première valeur de richesse de fonctionnement d'une étape de régénération ordinaire du piège pendant une durée de stabilisation $\Delta T$ prédéterminée ; puis,
-   qui est ensuite égale à une deuxième valeur de richesse de fonctionnement du moteur supérieure à la première valeur de richesse,

le réglage du moteur à la deuxième richesse de fonctionnement étant obtenu à partir du réglage du moteur à la première richesse de fonctionnement par le seul allongement de l'injection de la quantité secondaire de carburant.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

-   les figures 1 et 2 déjà commentées sont une illustration d'un critère de diagnostic selon un procédé antérieur ;

-   la figure 3 représente un dispositif de motorisation apte à la mise en oeuvre du procédé selon l'invention ;
-   la figure 4 est un organigramme des étapes d'un procédé de diagnostic d'un piège à oxydes d'azote conforme à l'invention ;
-   les figures 5 et 6 représentent respectivement les débits de carburant injectés dans un moteur lors d'une régénération classique et lors de la deuxième phase d'une régénération selon l'invention, dans un mode de réalisation non limitatif du procédé.
-   les figures 7 et 8 sont une illustration du critère de diagnostic selon l'invention, respectivement pour un piège dont l'efficacité est égale à 70% et pour un piège dont l'efficacité est égale à 12%.

DESCRIPTION DETAILLEE DES FIGURES

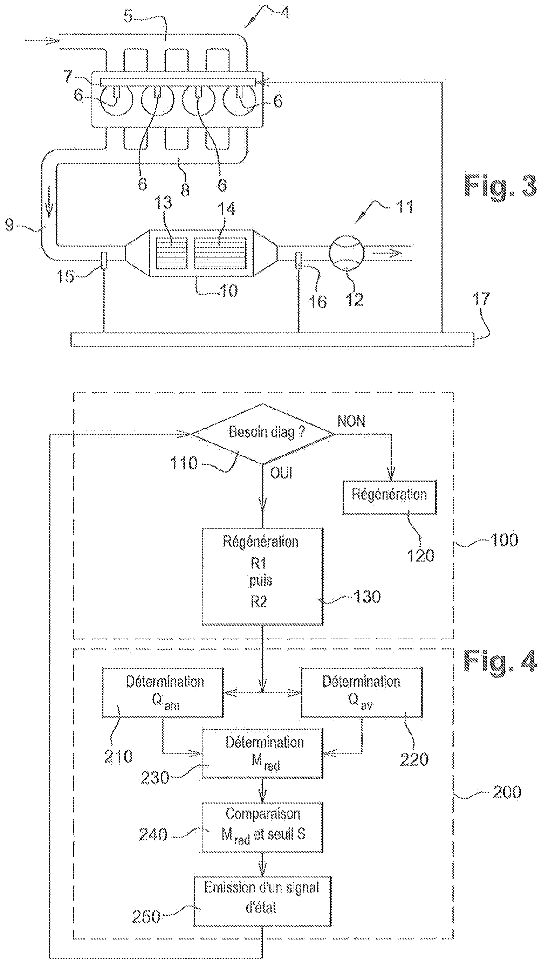

Sur la figure 3, on a représenté un moteur 4 à combustion interne, par exemple un moteur diesel de véhicule automobile, pourvu d'un dispositif de diagnostic selon l'invention. Le moteur 4 est alimenté en air par un collecteur d'admission 5 et en carburant, par exemple du gazole, par une pluralité d'injecteurs 6 montés sur une rampe commune 7 d'alimentation en carburant.

Le moteur 4 est équipé d'un circuit d'échappement des gaz brûlés, comprenant un collecteur d'échappement 8, une conduite d'échappement 9, un dispositif de traitement 10 des émissions polluantes du moteur 4 et un pot d'échappement 11 sur lequel est monté un débitmètre 12, par lequel les gaz d'échappement sont évacués dans l'atmosphère.

Bien entendu, le moteur peut être du type suralimenté, et dans ce cas il peut être associé à au moins un circuit de recirculation partielle des gaz d'échappement à l'admission, dit circuit EGR, sans pour autant sortir du cadre de l'invention.

Le moteur peut comporter des moyens de réglage du débit d'air à l'admission (par exemple une vanne ou boîtier-papillon) et/ou des moyens de réglage d'un débit de gaz d'échappement recyclés à l'admission (par exemple une vanne à l'échappement ou une vanne montée en aval du circuit EGR).

Le dispositif de traitement 10 des émissions polluantes se présente sous la forme d'une enveloppe métallique (ou « canning ») de forme sensiblement cylindrique terminée à ses deux extrémités par deux cônes de liaison respectivement avec la conduite d'échappement 9 et le pot d'échappement 11.

Cette enveloppe métallique contient un piège à oxydes d'azote 13. De manière non limitative, elle peut comprendre aussi un autre dispositif 14 de traitement des gaz d'échappement, par exemple un filtre à particules 14 ou un catalyseur d'oxydation 14, qui est disposé ici en aval du piège 13 (dans le sens de circulation des gaz d'échappement figuré par les flèches représentées sur la figure 4).

Le piège à oxydes d'azote 13 stocke une partie

des émissions de $NO_x$ du moteur 1 quand celui-ci fonctionne en mélange pauvre. Périodiquement, lorsqu'une phase de fonctionnement du moteur 4 en mélange riche (dite : phase de régénération, ou phase de purge) est déclenchée, le piège 13 réduit les $NO_x$ en molécules d'azote $N_2$ et de dioxyde de carbone $CO_2$ sous l'action de réducteurs, c'est-à-dire de molécules de monoxyde de carbone et d'hydrocarbures imbrûlés émises par le moteur 4.

Le piège à oxydes d'azote 13 est associé à des moyens de détermination de la richesse des gaz d'échappement du moteur 4 respectivement à l'entrée et à la sortie du piège 13, par exemple respectivement une sonde à oxygène amont 15, disposée sur la conduite d'échappement 9 en amont du piège 13, et une sonde à oxygène aval 16, disposée sur le pot d'échappement 11 en aval du piège 13.

Un calculateur électronique 17 est reliée au moins au moteur 4, à la sonde à oxygène amont 15 et à la sonde à oxygène aval 16. Le calculateur 17 comprend un dispositif de diagnostic embarqué et un moyen de commande du moteur qui permet notamment de déclencher :

- Quand la masse d'oxydes d'azote stockée dans le piège 13 atteint un seuil, sans qu'un diagnostic du piège ne doive être fait : une régénération ordinaire du piège à oxydes d'azote 13 par basculement du mode de fonctionnement du moteur 4 en mélange riche, à une première valeur de richesse R1 relativement faible ;
- Quand la masse d'oxydes d'azote stockée dans le piège 13 atteint un seuil, et qu'un diagnostic doit être fait : une régénération spéciale du piège 13 à des fins de diagnostic, par basculement du mode de fonctionnement du moteur 4 en mélange riche, à la première valeur de richesse R1 pendant une première phase d'une durée de stabilisation ∆T, puis à une deuxième valeur de richesse R2 pendant une deuxième phase ; et,
- Un fonctionnement du moteur 4 en mode normal, qui est un mode de stockage des oxydes d'azote, par basculement du mode de fonctionnement du moteur 4 en mélange pauvre.

La deuxième valeur de richesse R2 est supérieure à la première valeur de richesse R1. Avantageusement, la première valeur de richesse R1 est sensiblement égale à 1,05 et la deuxième valeur de richesse R2 est sensiblement égale à 1,10.

Pour déterminer si un diagnostic doit être fait, c'est-à-dire à quelle valeur de richesse R1, ou R1 puis R2, la régénération doit être lancée, le calculateur 17 peut par exemple déterminer le kilométrage parcouru par le véhicule depuis le précédent diagnostic et le comparer avec un seuil. Si ledit kilométrage est supérieur au seuil, alors le calculateur 17 force la régénération du piège 13 dans le deuxième mode.

Le dispositif de diagnostic comprend :

- un moyen de détermination du débit massique de réducteurs (monoxyde de carbone et hydrocarbures imbrûlés) contenus dans les gaz d'échappement en amont $Q_{am}$ du piège 13 ;
- un moyen de détermination du débit massique de réducteurs contenus dans les gaz d'échappement en aval $Q_{av}$ du piège 13 ;
- un moyen d'estimation de la durée ∆t d'une régénération partielle du piège, qui est la durée après laquelle la richesse mesurée par la sonde aval 16 atteint une troisième valeur de richesse R3, inférieure à la deuxième valeur de richesse R2 ;
- un moyen d'estimation de la masse de réducteurs $M_{red}$ consommée pendant ladite régénération partielle ;
- un moyen de détermination de l'état de défaillance du piège à oxydes d'azote 13.

Selon l'invention, le moyen de commande est apte à commander une régénération spéciale du piège 13 à des fins de diagnostic, quand la masse d'oxydes d'azote atteint un seuil, et qu'un diagnostic doit être fait. Plus précisément, il commande un basculement du mode de fonctionnement du moteur en mélange riche à la première valeur de richesse R1 pendant une durée de stabilisation ∆T prédéterminée, puis à une deuxième valeur de richesse R2, par exemple 1,10, le basculement débutant à partir d'une richesse inférieure à la stoechiométrie, par exemple une richesse inférieure à 0,9.

La richesse $Q_{av}$ mesurée par la sonde de richesse aval 16 commence alors à augmenter également à partir de cette richesse inférieure à la stoechiométrie, et après une durée ∆t à laquelle le piège 13 est partiellement régénéré, ladite richesse $R_{av}$ atteint une troisième valeur de richesse R3, inférieure à la seconde valeur de richesse R2, et qui est représentative du basculement de la richesse des gaz d'échappement en aval du piège 13 en mélange riche. Avantageusement, la troisième valeur de richesse est sensiblement égale à 1,04.

Au début de la régénération, le calculateur 17 émet un signal permettant de déclencher le calcul des débits massiques de réducteurs $Q_{am}$, $Q_{av}$ en amont et en aval du piège 13 pendant la régénération partielle du piège. Ces débits sont calculés respectivement par les équations suivantes :

$$(Eq.1) \qquad Q_{am} = Q_{ech} * R_{am}$$

$$(Eq.2) \qquad Q_{av} = Q_{ech} * R_{av}$$

,dans lesquelles :

- $Q_{ech}$ désigne le débit des gaz d'échappement, mesuré par le débitmètre 12 ;

- $R_{am}$ désigne la richesse des gaz d'échappement en amont du piège 13, mesurée par la sonde à oxygène amont 15 ; et
- $R_{av}$ désigne la richesse des gaz d'échappement en aval du piège 13, mesurée par la sonde à oxygène aval 16.

Ce signal sert également de déclencheur à l'intégration temporelle des débits massiques $Q_{am}$, $Q_{av}$ de réducteurs, dans le moyen d'estimation 26. La masse de réducteurs $M_{red}$ consommée dans le piège 13 est obtenue par l'équation suivante :

$$(Eq.3) \qquad M_{red} = \int_{\Delta t} (Q_{am} - Q_{av}) \cdot dt$$

,dans laquelle $\Delta t$ désigne la durée de la régénération partielle pendant laquelle le calcul de l'intégrale est réalisé.

Lorsque la richesse $R_{av}$ mesurée par la sonde aval 16 atteint la troisième valeur de richesse R3, le moyen de commande stoppe l'émission du signal temporel d'intégration dans le moyen d'estimation de la masse de réducteurs.

La régénération spéciale du piège 13 se poursuit ensuite jusqu'à épuisement du stock d'oxydes d'azote, c'est-à-dire jusqu'à ce que la richesse $R_{av}$ mesurée par la sonde aval 16 rejoigne la richesse $R_{am}$ mesurée par la sonde amont 15, ou bien jusqu'à l'écoulement d'une durée fixe prédéterminée.

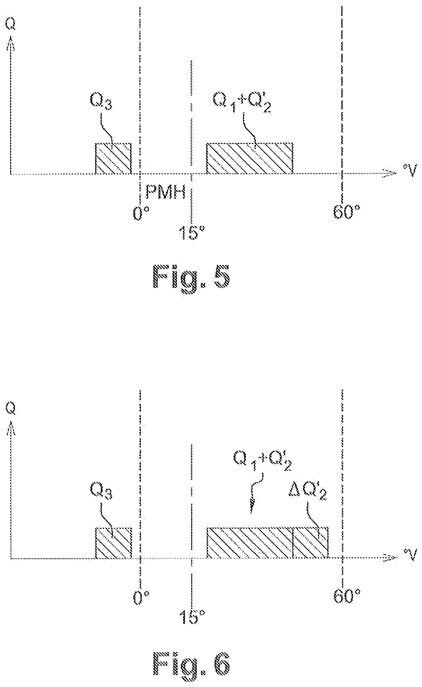

La figure 5 est un organigramme des étapes d'un procédé de diagnostic d'un piège à oxydes d'azote 13 selon l'invention.

Pendant le fonctionnement du moteur 4 en mélange pauvre, un procédé de commande 100 du moteur surveille l'accumulation de $NO_x$ dans le piège à oxydes d'azote 13. Lorsque le piège 13 atteint une valeur prédéterminée de stockage, qui peut être voisine de sa capacité maximale de stockage, le procédé de commande 100 déclenche une première étape de test 110 du piège 13, qui consiste à vérifier si un diagnostic du piège 13 doit être lancé.

Par exemple, le calculateur 17 peut déterminer le kilométrage parcouru par le véhicule depuis le précédent diagnostic et le comparer avec un seuil. Si ledit kilométrage est inférieur au seuil, alors le calculateur 17 détermine qu'il n'est pas nécessaire de procéder à un diagnostic, et le procédé oriente vers une étape de régénération ordinaire 120 du piège à oxydes d'azote 13 par basculement du mode de fonctionnement du moteur 4 en mélange riche, à une première valeur de richesse R1 relativement faible, par exemple 1,05.

Dans le cas contraire, le procédé oriente vers une étape de régénération spéciale 130 du piège à des fins de diagnostic, par basculement du mode de fonctionnement du moteur 4 en mélange riche, d'abord à la première valeur de richesse R1, puis à la deuxième valeur de richesse R2 relativement élevée, par exemple sensiblement égale à 1,10.

Cette étape de régénération spéciale 130 comprend une phase de régénération partielle du piège 13, pendant une durée $\Delta t$ représentative du basculement de la richesse des gaz en aval du piège 13 en mélange riche. Avantageusement, ce basculement correspond à l'instant où la richesse mesurée par la sonde aval 16 atteint une troisième valeur de richesse R3 sensiblement égale à 1,04.

Le procédé de diagnostic proprement dit 200 du piège à oxydes d'azote 13 est déclenché au début de l'étape de régénération spéciale, et se déroule ensuite de manière itérative. Ce procédé 200 commence par une étape de détermination 210 du débit massique de réducteurs $Q_{am}$ en amont du piège 13, obtenu selon l'équation 1, simultanément avec une étape de détermination 220 du débit massique de réducteurs $Q_{av}$ en aval du piège 13, obtenu selon l'équation 2.

La détermination de ces débits se fait pendant toute la phase de régénération partielle de la régénération spéciale 130. Le procédé de diagnostic 200 se poursuit par une étape 230 de détermination de la masse de réducteurs $M_{red}$ utilisée pendant la phase de régénération partielle. Cette masse est obtenue par intégration temporelle de l'écart des débits de réducteurs $Q_{am}$, $Q_{av}$ en amont et en aval du piège 13, entre l'instant de la réception du signal de démarrage de la phase de régénération 130 et l'instant de l'arrêt de la réception de ce signal (selon l'équation 3).

Le procédé 200 se poursuit par une étape 240 de la masse de réducteurs $M_{red}$ utilisé pendant la seconde phase de régénération partielle avec un seuil de défaillance S en dessous duquel on détermine que le piège à oxydes d'azote 13 est défaillant. Le seuil de défaillance S peut être déterminé au banc moteur par des essais statistiques.

Le procédé 200 se termine par une étape 250 au cours de laquelle un signal d'état est émis vers le procédé de commande 100 du moteur 1. Ce signal peut prendre deux états, soit un état défaillant, soit un état non défaillant. Lorsque l'état est défaillant, une alerte peut être remontée au conducteur, par exemple par l'allumage d'un voyant lumineux.

Les figures 5 et 6 représentent respectivement les débits de carburant injectés dans un moteur lors d'une régénération classique et lors de la deuxième phase d'une régénération selon l'invention, dans un mode de réalisation non limitatif du procédé selon l'invention.

Sur la figure 5, on a représenté les débits de carburant injectés dans un moteur 4 lors d'une régénération ordinaire du piège 13, tels qu'ils résultent de la mise au point du fonctionnement transitoire du moteur entre son mode de fonctionnement habituel en mélange pauvre et son mode de fonctionnement à la première valeur de richesse R1.

De manière connue en soi, on fait en sorte que ces réglages répondent à de nombreuses contraintes. Notamment, les réglages transitoires sont tels que le couple délivré reste sensiblement le même, pour que le conducteur n'ait pas besoin de réadapter la demande de couple pendant la transition, et qu'il ne ressente pas d'à-coups. Ils sont aptes à limiter le bruit lié à la combustion du carburant produisant le couple. Ils permettent aussi au moteur de fonctionner de façon fiable, notamment en limitant la dilution dans l'huile de lubrification du moteur d'une partie du carburant injecté dans le moteur pour la réduction des oxydes d'azote dans le piège, et en maîtrisant la température.

De manière non limitative, on peut utiliser les réglages prévus dans la publication FR-B1-2856432, dont on donne ici les grandes lignes.

Pendant le mode de régénération, on détermine une consigne de débit d'air selon le point de fonctionnement du moteur, on commande des moyens de réglage d'un débit d'air proche de la consigne, on injecte une quantité principale Q1 de carburant, destinée à fournir le couple moteur, et on injecte une quantité supplémentaire Q'2 de carburant, ou quantité secondaire Q'2, dont le début d'injection intervient plus tard dans le cycle de combustion. Plus précisément, la quantité secondaire Q'2 est injectée pendant la phase de détente du cycle de combustion, de sorte qu'elle ne participe pas à la combustion. Le carburant est ainsi évacué à l'échappement du moteur, et il maintient les gaz d'échappement à l'état réducteur. La quantité secondaire Q'2 de carburant peut, par exemple, être fusionnée ou accolée à l'injection de la quantité principale Q1 comme c'est le cas sur la figure 5, mais elle peut aussi en être séparée.

Pour un même point de fonctionnement régime/charge du moteur, le début de l'injection de la quantité principale Q1 est retardé par rapport au début de l'injection de la quantité principale de carburant Q1 de carburant utilisé quand le moteur fonctionne en mélange pauvre. Par exemple, comme le montre la figure 5, il est déphasé d'au moins 15° d'angle de rotation du vilebrequin (°V sur la figure 5) du moteur après le point mort haut (PMH sur la figure 5). La quantité principale Q1 de carburant est aussi plus grande. En ajustant le retard d'injection et l'augmentation de la quantité principale Q1, on dégrade le rendement de combustion du moteur de manière contrôlée tout en maintenant le couple, et on maîtrise ainsi la température du moteur et des composants mécaniques qui lui sont associés.

On peut, en outre, injecter une quantité prédéterminée Q3 de carburant, dite quantité pilote Q3, avant l'injection de la quantité principale Q1. Cette quantité pilote Q3 sert à diminuer le bruit lié à la combustion. Dans ce cas, la mise au point des réglages transitoires du moteur lors du mode de régénération ordinaire est encore plus complexe. Le couple moteur n'est pas fourni par la seule quantité principale Q1, mais par la somme de la quantité principale Q1 et de la quantité pilote Q3. Il faut donc calibrer par des essais au banc la répartition entre la quantité principale Q1 et la quantité pilote, ainsi que le phasage dans le cycle de combustion du début de l'injection de la quantité principale Q1 et de la quantité pilote Q3.

Bien entendu, des variantes sont connues de l'état de la technique. Par exemple, la quantité principale Q1 de carburant utilisée lors du fonctionnement normal du moteur en mélange pauvre pour produire le couple est souvent elle-même répartie en plusieurs injections distinctes comprenant une pré-injection et/ou une post-injection. Dans ce cas, la quantité pilote Q3 peut être fusionnée avec ladite pré-injection et/ou la quantité secondaire Q'2 peut être fusionnée avec ladite post-injection.

On comprend de ce qui précède que la mise au point du moteur en régime transitoire est déjà fastidieuse lorsqu'un seul mode de régénération du piège 13 est prévu. Selon l'invention, on propose de limiter fortement le travail de mise au point supplémentaire nécessaire au diagnostic. Elle propose pour cela de dériver le réglage du moteur lors de la régénération à la deuxième valeur de richesse R2, du réglage préexistant pour la régénération à la première valeur de richesse R1.

Pour cela, aucune modification de la consigne de débit d'air ni de réglage des vannes de réglage de débit d'air et/ou de gaz d'échappement recyclés n'est nécessaire. Aucune modification des quantités principale et pilote Q1,Q3 ni de leurs phasages n'est faite. Aucune modification du phasage de la quantité secondaire Q'2, plus précisément du début de l'injection de la quantité secondaire, n'est faite. Selon l'invention, l'unique modification du réglage consiste à allonger la durée de la quantité supplémentaire Q'2, de manière à augmenter la richesse du mélange air/carburant depuis la première valeur de richesse R1 jusqu'à la deuxième valeur de richesse R2. Cette augmentation ΔQ'2 de la quantité secondaire est quasiment instantanée, ne dépendant que du temps de réponse des injecteurs.

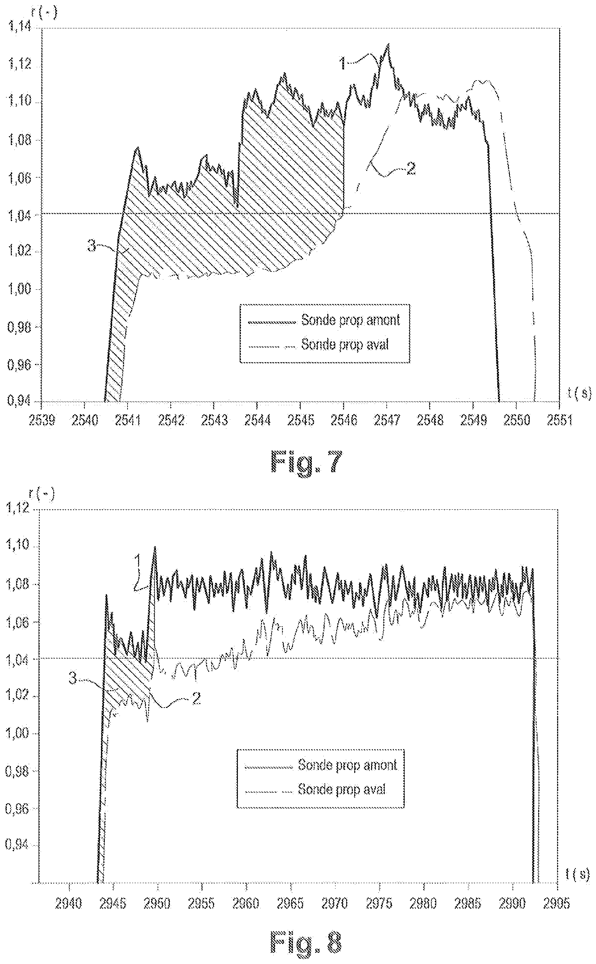

Les figures 7 et 8 illustrent respectivement, d'une manière similaire aux figures 1 et 2 qui ont été commentées plus haut, l'évolution temporelle de la richesse des gaz à l'entrée et à la sortie d'un piège 13 à oxydes d'azote pendant une phase de commande 100 telle qu'exposé plus haut, plus particulièrement pendant une phase de régénération spéciale 130. Les courbes en trait plein 1 représentent la richesse mesurée par la sonde à oxygène amont 15 et les courbes en trait mixte 2 représentent la richesse mesurée par la sonde à oxygène aval 16.

La figure 7 représente le comportement d'un piège 13 en bon état, par exemple un piège dont l'efficacité a une valeur égale à 70%. La régénération spéciale 130 se déroule ici sensiblement entre les instants t = 2540,5 s et t =2547,5 s , c'est-à-dire en moins de 10 secondes. La phase de régénération partielle prend fin à l'instant t = 2546 s, c'est-à-dire qu'elle a une durée comprise entre 5 et 6 secondes. La première valeur de richesse R1 est maintenue pendant une durée de stabilisation ΔT comprise entre 2 et 3 secondes. La surface hachurée 3 représente la masse de réducteurs $M_{red}$ consommée pendant la phase de régénération partielle.

La figure 8 représente le comportement d'un piège 13 dégradé, par exemple un piège dont l'efficacité a une valeur égale à 12%. La régénération spéciale 130 est ici nettement plus longue que pour un piège en bon état, soit environ 50 secondes, comme on a pu l'indiquer grâce à une échelle horizontale différente de celle qui apparaît sur la figure 7. La phase de régénération partielle se déroule ici sensiblement entre les instants t = 2944 s et t = 2950 s, c'est-à-dire une durée sensiblement égale à celle de la régénération partielle de la figure 7. Toutefois, en faisant abstraction de la différence d'échelle entre ces deux figures, on observe ici que la surface hachurée 3, représentant (à un facteur d'échelle près) la masse de réducteurs $M_{red}$ consommée pendant la phase de régénération partielle, est moins élevée que sur la figure 7.

Bien entendu, l'invention n'est pas limitée au mode de réalisation qui vient d'être décrit et l'homme de métier pourra envisager toute variante de nature à perfectionner l'invention. Par exemple, pour économiser du carburant lors de la phase de purge On pourra notamment prévoir que la deuxième valeur de richesse R2 de fonctionnement du moteur ne soit maintenue que pendant la durée $\Delta t$ de la phase de régénération partielle pendant laquelle on détermine la masse de réducteurs $M_{red}$, la richesse reprenant ensuite sa première valeur de richesse R1 pour la fin de la régénération spéciale.

## Revendications

1. Procédé de diagnostic (200) d'un piège à oxydes d'azote (13) associé à un moteur (4) à combustion interne, ledit piège (13) étant apte à réduire les oxydes d'azote stockés en son sein par réaction avec du carburant du moteur pendant une étape de régénération (120,130) du piège (13), ladite étape de régénération (120,130) étant provoquée par un basculement du réglage du moteur (4) en mélange riche dans lequel le couple du moteur (4) est issu de l'injection (4) d'au moins une quantité principale (Q1) de carburant et le carburant pour la réduction des oxydes d'azote est issu de l'injection d'une quantité secondaire (Q'2) de carburant, ledit procédé comprenant :

     - une étape de détermination (230) de la masse de réducteurs ($M_{red}$) consommée au cours d'une étape de régénération ;
     - une étape (240) de comparaison de ladite masse ($M_{red}$) avec un seuil de défaillance (S) en dessous duquel on détermine que le piège (13) est défaillant ; et
     - une étape (250) d'émission d'un signal indiquant l'état de défaillance du piège (13),

**CARACTERISE EN CE QU'**
on détermine la masse de réducteurs ($M_{red}$) au cours d'une étape de régénération spéciale (130) du piège (4) réalisée aux fins du diagnostic à une valeur de richesse (R1,R2) de fonctionnement du moteur (4) qui est

     - d'abord égale à une première valeur de richesse (R1) de fonctionnement d'une étape de régénération ordinaire (120) du piège (13) pendant une durée de stabilisation ($\Delta T$) prédéterminée ; puis,
     - qui est ensuite égale à une deuxième valeur de richesse (R2) de fonctionnement (R2) du moteur supérieure à la première valeur de richesse (R1).

le réglage du moteur à la deuxième richesse (R2) de fonctionnement étant obtenu à partir du réglage du moteur à la première richesse (R1) de fonctionnement par le seul allongement de l'injection de la quantité secondaire (Q'2) de carburant.

2. Procédé de diagnostic (200) selon la revendication 1, dans lequel la deuxième valeur de richesse (R2) est sensiblement égale à 1,10 et dans lequel la première valeur de richesse (R1) est sensiblement égale à 1,05.

3. Procédé de diagnostic (200) selon l'une des revendications 1 ou 2, dans lequel la masse de réducteurs est calculée pendant la durée ($\Delta t$) d'une phase de régénération partielle de l'étape de régénération spéciale (130) du piège (13).

4. Procédé de diagnostic (200) selon la revendication 3, dans lequel la durée ($\Delta t$) de la phase de régénération partielle s'achève lorsque la richesse des gaz d'échappement du moteur (4) à la sortie du piège (13) atteint une troisième valeur de richesse (R3).

5. Procédé de diagnostic selon la revendication 4, dans lequel le troisième valeur de richesse (R3) est inférieure à la deuxième valeur de richesse (R2).

6. Procédé de diagnostic selon la revendication 5, dans lequel la troisième valeur de richesse (R3) est sensiblement égale à 1,04.

7. Procédé de diagnostic (200) selon l'une quelconque des revendications 3 à 6, dans lequel la masse de réducteurs ($M_{red}$) est calculée comme l'intégrale temporelle, pendant la durée ($\Delta t$) de la phase de régénération partielle, de la différence entre un débit massique de réducteurs en amont ($Q_{am}$) du piège (13) et un débit massique de réducteurs en aval ($Q_{av}$) du piège (13).

**8.** Dispositif de diagnostic (17) d'un piège à oxydes d'azote (13) pour le traitement des émissions polluantes d'un moteur (4) pour la mise en oeuvre du procédé (200) selon l'une quelconque des revendications précédentes, comprenant :

- un moyen de détermination (23) du débit de réducteurs ($Q_{am}$) contenus dans les gaz d'échappement du moteur (4) en amont du piège (13), mesuré au cours d'une étape de régénération, relié à une sonde à oxygène (15) située en amont du piège (13) ;
- un moyen de détermination (24) du débit de réducteurs ($Q_{av}$) contenus dans les gaz d'échappement du moteur (4) en aval du piège (13), mesuré au cours d'une étape de régénération, relié à une sonde à oxygène (16) située en aval du piège (13) ;
- un moyen de détermination (26) de la masse de réducteurs ($M_{red}$) consommée au cours d'une étape de régénération, relié au moyen de détermination (23) du débit de réducteurs ($Q_{am}$) en amont du piège (13) et au moyen de détermination (24) du débit de réducteurs ($Q_{av}$) en aval du piège (13) ;
- un moyen de détermination (27) de l'état de défaillance du piège (13) en fonction de ladite masse de réducteurs ($M_{red}$) ;

**CARACTERISE EN CE QU'**
ledit dispositif de diagnostic (17) comprend en outre un moyen de commande (22) du moteur apte à basculer le mode de fonctionnement du moteur (4) en mélange riche, à une première valeur de richesse (R1) pour une régénération ordinaire (120) du piège (13), ou à la première valeur de richesse pendant une durée de stabilisation (ΔT) prédéterminée puis à une deuxième valeur de richesse (R2) qui est supérieure à la première, pour une régénération spéciale (130) du piège provoquée aux fins du diagnostic (200).

**Patentansprüche**

**1.** Verfahren zur Diagnose (200) einer Stickoxidfalle (13), die mit einem Verbrennungsmotor (4) assoziiert ist, wobei die Falle (13) geeignet ist, die Stickoxide zu reduzieren, die in seinem Inneren gespeichert sind, durch eine Reaktion mit einem Motortreibstoff während eines Regenerierungsschritts (120, 130) der Falle (13), wobei der Regenerierungsschritt (120, 130) durch ein Schalten der Regelung des Motors (4) zu einem reichen Gemisch bewirkt wird, wobei das Drehmoment des Motors (4) durch die Einspritzung (4) mindestens einer Hauptmenge (Q1) an Treibstoff erhalten wird, und der Treibstoff zur Reduktion der Stickoxide durch die Einspritzung einer sekundären Menge (Q'2) an Treibstoff erhalten wird, wobei das Verfahren umfasst:

- einen Schritt (230) des Bestimmens der Masse der Reduktoren ($M_{red}$), die während des Regenerierungsschritts verbraucht werden;
- einen Schritt (240) des Vergleiches der Masse ($M_{red}$) mit einer Ausfallschwelle (S), unter der bestimmt wird, dass die Falle (13) ausfällt; und
- einen Schritt (250) des Sendens eines Signals, das den Ausfallzustand der Falle (13) anzeigt, **dadurch gekennzeichnet, dass**:

die Masse der Reduktoren ($M_{red}$) während eines speziellen Regenerierungsschritts (130) der Falle (4) bestimmt wird, welcher am Ende der Diagnose bei einem Wert der Reichheit (R1, R2) des Betriebs des Motors (4) durchgeführt wird, der

- zuerst gleich ist einem ersten Wert der Reichheit (R1) des Betriebs eines gewöhnlichen Regenerierungsschritts (120) der Falle (13) während einer vorherbestimmten Stabilisationsdauer (ΔT); anschließend
- der dann gleich ist einem zweiten Wert der Reichheit (R2) des Betriebs (R2) des Motors über dem ersten Wert der Reichheit (R1),

wobei die Regelung des Motors bei der zweiten Reichheit (R2) des Betriebs durch das Regeln des Motors bei der ersten Reichheit (R1) des Betriebs nur durch die Verlängerung des Einspritzens der sekundären Menge (Q'2) an Treibstoff erhalten wird.

**2.** Diagnoseverfahren (200) nach Anspruch 1, wobei der zweite Wert der Reichheit (R2) im Wesentlichen gleich 1,10 ist, und wobei der erste Wert der Reichheit (R1) im Wesentlichen gleich 1,05 ist.

**3.** Diagnoseverfahren (200) nach einem der Ansprüche 1 oder 2, wobei die Masse der Reduktoren während der Dauer (Δt) einer partiellen Regenerierungsphase des speziellen Regenerierungsschritts (130) der Falle (13) berechnet wird.

**4.** Diagnoseverfahren (200) nach Anspruch 3, wobei die Dauer (Δt) der partiellen Regenerierungsphase endet, wenn die Reichheit des Abgases des Motors (4) am Ausgang der Falle (13) einen dritten Wert der Reichheit (R3) erreicht.

**5.** Diagnoseverfahren nach Anspruch 4, wobei der dritte Wert der Reichheit (R3) kleiner ist als der zweite Wert der Reichheit (R2).

**6.** Diagnoseverfahren nach Anspruch 5, wobei der dritte Wert der Reichheit (R3) im Wesentlichen gleich 1,04 ist.

**7.** Diagnoseverfahren (200) nach einem der Ansprüche 3 bis 6, wobei die Masse der Reduktoren ($M_{red}$) als Zeitintegral, während der Dauer ($\Delta t$) der partiellen Regenerierungsphase, der Differenz zwischen einem Massendurchsatz der Reduktoren stromaufwärts ($Q_{am}$) von der Falle (13) und einem Massendurchsatz der Reduktoren stromabwärts ($Q_{av}$) von der Falle (13) berechnet wird.

**8.** Diagnosevorrichtung (17) einer Stickoxidfalle (13) zur Behandlung der Schadstoffemissionen eines Motors (4) zur Durchführung des Verfahrens (200) nach einem der vorhergehenden Ansprüche, umfassend:

- ein Mittel (23) zum Bestimmen des Durchsatzes der Reduktoren ($Q_{am}$), die in den Abgasen des Motors (4) stromaufwärts von der Falle (13) enthalten sind, gemessen während eines Regenerierungsschritts, das mit einer Sauerstoffsonde (15) verbunden ist, die stromaufwärts von der Falle (13) angeordnet ist;
- ein Mittel (24) zum Bestimmen des Durchsatzes der Reduktoren ($Q_{av}$), die in den Abgasen des Motors (4) stromabwärts von der Falle (13) enthalten sind, gemessen während eines Regenerierungsschritts, das mit einer Sauerstoffsonde (16) verbunden ist, die stromabwärts von der Falle (13) angeordnet ist;
- ein Mittel (26) zum Bestimmen der Masse der Reduktoren ($M_{red}$), die während eines Regenerierungsschritts verbraucht werden, das mit dem Mittel (23) zum Bestimmen des Durchsatzes der Reduktoren ($Q_{am}$) stromaufwärts von der Falle (13) und mit dem Mittel (24) zum Bestimmen des Durchsatzes der Reduktoren ($Q_{av}$) stromabwärts von der Falle (13) verbunden ist;
- ein Mittel (27) zum Bestimmen des Ausfallzustands der Falle (13) als Funktion der Masse der Reduktoren ($M_{red}$) ;

**dadurch gekennzeichnet, dass** die Diagnosevorrichtung (17) außerdem ein Steuermittel (22) des Motors umfasst, das geeignet ist, den Betriebsmodus des Motors (4) zu einem reichen Gemisch zu schalten, bei einem ersten Wert der Reichheit (R1) für eine gewöhnliche Regenerierung (120) der Falle (13), oder bei einem zweiten Wert der Reichheit während einer vorherbestimmten Stabilisationsdauer ($\Delta T$), dann bei einem zweiten Wert der Reichheit (R2), der größer ist als der erste, für eine spezielle Regenerierung (130) der Falle, die am Ende der Diagnose (200) bewirkt wird.

**Claims**

**1.** Method (200) for diagnosing a nitrogen oxides trap (13) associated with an internal combustion engine (4), said trap (13) being able to reduce the nitrogen oxides stored within it by reaction with fuel from the engine during a trap (13) regeneration step (120, 130), said regeneration step (120, 130) being brought about by a switchover of the engine (4) setting to rich-burn during which the engine (4) torque derives from the injection (4) of at least a main quantity (Q1) of fuel and the fuel for the reduction of the nitrogen oxides is derived from the injection of a secondary quantity (Q'2) of fuel, said method comprising:

- a step (230) of determining the mass of reducing agents ($M_{red}$) consumed during a regeneration step;
- a step (240) of comparing said mass ($M_{red}$) with a defectiveness threshold (S) below which the trap (13) is determined to be defective; and
- a step (250) of emitting a signal indicating the defectiveness status of the trap (13),

**CHARACTERIZED IN THAT**
the mass of reducing agents ($M_{red}$) is determined during a step (130) of special regeneration of the trap (4) which step is performed for diagnostic purposes at an engine (4) operating richness value (R1, R2) which is

- first of all equal to a first operating richness value (R1) for a step (120) of ordinary regeneration of the trap (13) for a predetermined stabilizing time ($\Delta T$); then
- which is then equal to a second engine operating (R2) richness value (R2) higher than the first richness value (R1),

the setting of the engine to the second operating richness (R2) being obtained from the setting of the engine to the first operating richness (R1) merely by lengthening the injection of the secondary quantity (Q'2) of fuel.

**2.** Diagnosis method (200) according to Claim 1, in which the second richness value (R2) is substantially equal to 1.10 and in which the first richness value (R1) is substantially equal to 1.05.

**3.** Diagnosis method (200) according to one of Claims 1 and 2, in which the mass of reducing agents is calculated for the duration ($\Delta t$) of a phase of partial regeneration of the step (130) of special regeneration of the trap (13).

**4.** Diagnosis method (200) according to Claim 3, in

which the duration ($\Delta t$) of the phase of partial regeneration finishes when the richness of the engine (4) exhaust gases exiting the trap (13) reaches a third richness value (R3).

5. Diagnosis method (200) according to Claim 4, in which the third richness value (R3) is lower than the second richness value (R2).

6. Diagnosis method according to Claim 5, in which the third richness value (R3) is substantially equal to 1.04.

7. Diagnosis method (200) according to any one of Claims 3 to 6, in which the mass of reducing agents ($M_{red}$) is calculated as being the integral with respect to time, over the duration ($\Delta t$) of the phase of partial regeneration, of the difference between a mass flow rate of reducing agents ($Q_{us}$) upstream of the trap (13) and a mass flow rate of reducing agents ($Q_{ds}$) downstream of the trap (13).

8. Device (17) for diagnosing a nitrogen oxides trap (13) for treating the pollutant emissions of an engine (4) for implementing the method (200) according to any one of the preceding claims, comprising:

   - a means (23) of determining the flow rate of reducing agents ($Q_{us}$) contained in the exhaust gases of the engine (4) upstream of the trap (13), which flow rate is measured during a regeneration step, connected to an oxygen probe (15) situated upstream of the trap (13);
   - a means (24) of determining the flow rate of reducing agents ($Q_{ds}$) contained in the exhaust gases of the engine (4) downstream of the trap (13), which flow rate is measured during a regeneration step, connected to an oxygen probe (16) situated downstream of the trap (13);
   - a means (26) of determining the mass of reducing agents ($M_{red}$) consumed during a regeneration step, which is connected to the means (23) of determining the flow rate of reducing agents ($Q_{us}$) upstream of the trap (13) and to the means (24) of determining the flow rate of reducing agents ($Q_{ds}$) downstream of the trap (13);
   - a means (27) of determining the defectiveness status of the trap (13) as a function of said mass of reducing agents ($M_{red}$);

   **CHARACTERIZED IN THAT**
   said diagnosis device (17) further comprises an engine control means (22) able to switch the mode of operation of the engine (4) to rich-burn, at a first richness value (R1) for ordinary regeneration (120) of the trap (13), or to the first richness value for a predetermined stabilizing time ($\Delta T$) and then at a second richness value (R2) which is higher than the first, for a special regeneration (130) of the trap brought about for diagnostic purposes (200).

Fig. 1

Fig. 2

Fig. 3

Fig. 4

Fig. 5

Fig. 6

Fig. 7

Fig. 8

## RÉFÉRENCES CITÉES DANS LA DESCRIPTION

**Documents brevets cités dans la description**

- FR 2940356 B1
- FR 2999233 A1
- FR 1360334
- FR 2856432 B1